# EUROPÄISCHE PATENTSCHRIFT

(11) **EP 1 606 066 B1**
(45) Veröffentlichungstag und Bekanntmachung des Hinweises auf die Patenterteilung: **28.01.2009**
(21) Anmeldenummer: 04721501.7
(22) Anmeldetag: 18.03.2004
(51) Int. Cl.: B09B 3/00

(54) **VERFAHREN ZUR ENTSORGUNG VON STAUB- UND/ODER PARTIKELFÖRMIGEN ABFALLGÜTERN**
METHOD FOR THE DISPOSAL OF WASTE PRODUCTS IN THE FORM OF DUST AND/OR PARTICLES
PROCEDE D'ELIMINATION DE DECHETS SOUS FORME DE POUSSIERES OU DE PARTICULES

(30) Priorität: 27.03.2003 DE 10313967
(43) Veröffentlichungstag der Anmeldung: 21.12.2005
(73) Patentinhaber: THERMOSELECT AKTIENGESELLSCHAFT, FL-9490 Vaduz (LI)
(72) Erfinder: KISS, Günther, H., FL-9495 Triesen (LI)
(74) Vertreter: Pfenning, Meinig & Partner GbR
(86) Internationale Anmeldenummer: PCT/EP2004/002819
(87) Internationale Veröffentlichungsnummer: WO 2004/085083

(56) Entgegenhaltungen:
- EP-A- 1 041 049
- DE-C- 4 130 416

## Beschreibung

Die vorliegende Erfindung bezieht sich auf ein Verfahren zur Entsorgung von staub- und/oder partikelförmigen Abfallgütern.

Zur Entsorgung und Nutzbarmachung von partikel- oder staubförmigen Rückständen, insbesondere Filterstäuben aus Müllverbrennungsanlagen mit einer hohen Konzentration an Schwermetallen, Chlorverbindungen, Dioxin, Furanen wird im Stand der Technik von der Untertage-Deponierung Gebrauch gemacht. Die Untertagedeponierung führt allerdings zu sehr hohen Entsorgungskosten und stellt langfristig keine Lösung als Entsorgungsweg dar, da die hohen Schadstoffpotenziale in dem zu entsorgenden Material erhalten bleiben.

Andererseits ist die Entsorgung und Nutzbarmachung von staub- oder partikelförmigen Rückständen durch Einbringen in eine Müllverbrennungsanlage oder auch in eine Hochtemperatur-Recyclinganlage nach dem Stand der Technik unmöglich, da derartige Stäube erneut mit dem Abgas ausgetragen werden und bei den üblichen Verbrennungsanlagen auch keine weitere Senke für die Abscheidung von Schwermetallen und Begleitstoffen besteht.

Aus dem Stand der Technik in Thermoselect - "Der neue Weg, Restmüll umweltgerecht zu behandeln" Dr. Ing. Günter Hässler, Karlsruhe 1995, Verlag Karl Groener Karlsruhe, ist ein spezielles Verfahren zur Hochtemperaturbehandlung von Müll bekannt.

Dieses Verfahren beschreibt die Entsorgung und Nutzbarmachung von Abfallgütern aller Art, bei dem unsortierter, unbehandelter, beliebige Schadstoffe in fester und/oder flüssiger Form enthaltender Industrie-, Haus- und/oder Sondermüll sowie Industriegüterwracks in einem Reaktor einer stufenweisen Temperaturbeaufschlagung und thermischen Trennung bzw. Stoffumwandlung unterzogen wird. Die anfallenden festen Rückstände werden dabei in eine Hochtemperaturschmelze überführt, wobei das vor Einbringen in den Reaktor chargenweise zu Kompaktpaketen in einer Müllpresse komprimierte Entsorgungsgut die Temperaturbehandlungsstufen in Richtung steigender Temperatur mit mindestens einer Niedertemperaturstufe, in der unter Aufrechterhaltung der Druckbeaufschlagung ein form- und kraftschlüssiger Kontakt mit den Wänden des Reaktors sichergestellt ist, und mit mindestens einer Hochtemperaturzone, in der das Entsorgungsgut eine gasdurchlässige Schüttung ausbildet und Synthesegas erzeugt wird, durchläuft. Das erzeugte Synthesegas wird dann aus der Hochtemperaturzone abgeleitet und durch Besprühen mit Kühlwasser schockgekühlt und das Kühlwasser in ein Absetzbecken geleitet.

DE-41 30 416, der für den Gegenstand des Anspruchs 1 als nächstliegender Stand der Technik angesehen wird, umfasst ein Verfahren gemäss dem Oberbegriff des Anspruchs 1.

Aufgabe der vorliegenden Erfindung ist es ausgehend hiervon, ein Verfahren anzugeben, mit dem staub- oder partikelförmige Rückstände, vorliegend z.B. als Filterstäube, sicher, ökologisch und zu geringen Kosten verarbeitet werden können. Diese Aufgabe wird durch das erfindungsgemäße Verfahren nach dem Anspruch 1 gelöst. Vorteilhafte weiterbildungen des erfindungsgemäßen Verfahrens werden in den abhängigen Ansprüchen angegeben.

Nach dem erfindungsgemäßen Verfahren werden staubund/oder partikelförmige Rückstände, insbesondere toxische Staubpartikel, Filterrückstände (z.B. von Müllverbrennungsanlagen), Trockensorbentien und beladene Aktivkohle, konfektioniert und mit dem vorstehend beschriebenen Verfahren, nachfolgend Thermoselect-Verfahren genannt, einer Temperaturbehandlung unterzogen. Dabei wird unter Konfektionieren der staubförmigen bzw. partikelförmigen Rückstände erfindungsgemäß verstanden, als Vorkonfektionierung der staub- oder partikelförmigen Rückstände eine Dispersion, bevorzugt Suspension, einzusetzen.

Die erfindungsgemäße Konfektionierung der staub- oder partikelförmigen Rückstände und deren Einbringung in das Thermoselect-Verfahren bietet gegenüber einer Einbringung der unbehandelten Staubpartikel in ein Müllverbrennungsverfahren bzw. der Einbringung der unbehandelten Staubpartikel in das Thermoselect-Verfahren den Vorteil, dass die staub- und/oder partikelförmigen Rückstände eine stoffliche Umwandlung erfahren, bevor sie mit dem Abgas ausgetragen werden. Die erfindungsgemäße Behandlung der konfektionierten staub- und/oder partikelförmigen Rückstände führt vorteilhafterweise.dazu, dass die in den staub- oder partikelförmige Rückstände enthaltenden Schwermetalle fest eingebunden und mit dieser anschließend aus dem Verfahren ausgetragen und als inaktiver Bestandteil abgeschreckt werden können. Weiterhin resultiert aus diesem Verfahren der Vorteil, dass die anderen Verunreinigungen unmittelbar durch Schockkühlung mit Wasser in den Gaswäschen des Thermoselect-Verfahrens abgetrennt und in der Prozesswasserreinigung durch Füllung in ein industriell wieder verwertbares Hydroxid-Konzentrat überführt werden.

Gemäß der vorliegenden Erfindung wird somit vorgesehen, die staub- und/oder partikelförmigen Rückstände in eine Dispersion, bevorzugt in eine Suspension zu überführen und dann diese Dispersion bei Hochtemperaturbehandlung zuzuführen. Erfindungsgemäß ist hierbei eine Dispersion, bevorzugt eine Suspension, mit Wasser bevorzugt, da diese kostengünstig herstellbar ist. Selbstverständlich können auch andere Dispersionen bzw. Suspensionen z.B. solche mit einem viskositätsverändertem Mittel herstellt werden. Als geeignetes Mittel sind hier schwerölhaltige Bindemittel zu nennen. Ferner ist es günstig, wenn der Dispersion weitere Mittel wie Raffinierabfallprodukte und/oder Stärke zugesetzt werden. Es kann der Dispersion/Suspension auch zusätzlich noch Aktivkohle und/oder Tiermehl zugesetzt werden. Durch diese vorteilhafte Ausgestaltung der Erfindung wird der Heizwert der vorkonfektionierten staub- und/oder partikelförmigen Rückstände deutlich erhöht, das sich vorteilhaft für die weitere Temperaturbehandlung auswirkt.

Eine weitere bevorzugte Ausführung besteht in der Herstellung einer Dispersion wie vorstehend beschrieben, gegebenenfalls unter Zusatz eines weiteren Bindemittels und der anschließenden Brikettierung dieses Gemisches aus suspendiertem Staub und Bindemittel. Bei dieser Art der Konfektionierung der staub- oder partikelförmigen Rückstände in einen gebundenen Zustand kommt es erfindungsgemäß nicht auf die Erstellung eines Körpers einer reproduzierbaren geometrischen Form an, sondern vielmehr auf eine im Sinne der Erfindung handhabbare Konfektionierung. Deswegen bieten sich auch als Alternative zu der Brikettierung die Pelletierung oder das Strangpressen an. Vorzugsweise können dabei die Staubpartikel mit Schwerölen suspendiert werden. Weitere bevorzugte Bindemittel stellen geladene A-Kohle, Tiermehl, Raffinerieabfallprodukte, Stärke oder ähnliche Substanzen dar. Die Bindemittel erhöhen vorteilhafterweise den Heizwert der Briketts und führen bei Erhitzung zum sofortigen Zerfallen, wodurch der Wärmeertrag deutlich verbessert wird.

Eine Alternative zu dieser Ausführung der Konfektionierung besteht in der Zugabe bzw. Zuführung von kleinstückigen Thermoplasten zu den staub- oder partikelförmigen Rückständen, die dann thermisch brikettiert werden. Diese thermische Brikettierung findet vorzugsweise in einem Temperaturbereich von 40° C bis 80° C statt.

Eine weitere alternative Ausführung des Verfahrens besteht in der Hochdruck-Brikettierung der staub- oder partikelförmigen Rückstände bzw. der Mischung aus staub- oder partikelförmigen Rückständen und Bindemitteln.

Schließlich können verschiedene Varianten der Zuführung der Briketts zu dem Thermoselect-Verfahren verwendet werden. Zum einen ist die Zuführung der Briketts oder anderweitig konfektionierten Rückstände über den Müllbunker denkbar. Eine andere Ausführungsform sieht die Einbringung der Briketts oder anderweitig konfektionierten Rückstände in die Müllpresse vor. Schließlich können die konfektionierten staub- oder partikelförmigen Rückstände auch dem Reaktor direkt zugeführt werden.

## Patentansprüche

1. Verfahren zur Entsorgung und Nutzbarmachung von Abfallgütern aller Art, bei dem unsortierter, Schadstoffe in fester und/oder flüssiger Form enthaltender Industrie-, Haus- und/oder Sondermüll sowie Industriegüterwracks in einem Reaktor einer stufenweisen Temperaturbeaufschlagung und thermischen Trennung oder Stoffumwandlung unterzogen werden und die anfallenden festen Rückstände in eine Hochtemperaturschmelze überführt werden; wobei das vor Einbringen in den Reaktor chargenweise zu Kompaktpaketen in einer Müllpresse komprimierte Entsorgungsgut die Temperaturbehandlungsstufen in Richtung steigender Temperatur mit mindestens einer Niedertemperaturstufe, in der unter Aufrechterhaltung einer Druckbeaufschlagung ein Kontakt mit den Wänden des Reaktors sichergestellt ist, und mit mindestens einer Hochtemperaturzone unter Ausbildung einer gasdurchlässigen Schüttung, wobei Synthesegas erzeugt wird, durchläuft, wobei das erzeugte Synthesegas aus der Hochtemperaturzone abgeleitet und durch Besprühen mit Kühlwasser schockgekühlt wird,
**dadurch gekennzeichnet ,**
**dass** im Falle von staub- und/oder partikelförmigen Rückständen als Abfallgüter diese durch Bildung einer Dispersion vorkonfektioniert und dann dem Prozess zugeführt werden.

2. Verfahren nach Anspruch 1,
**dadurch gekennzeichnet,**
**dass** die Rückstände ausgewählt sind aus der Gruppe bestehend aus Filterstäuben, Trockensorbentien, wie z.B. Carbonate, und/oder beladene Aktivkohle.

3. Verfahren nach einem der vorhergehenden Ansprüche,
**dadurch gekennzeichnet,**
**dass** die Dispersion eine Suspension ist.

4. Verfahren nach einem der vorhergehenden Ansprüche,
**dadurch gekennzeichnet,**
**dass** die vorkonfektionierten Abfallgüter der Müllpresse zugeführt werden.

5. Verfahren nach einem der vorhergehenden Ansprüche,
**dadurch gekennzeichnet,**
**dass** die vorkonfektionierten Abfallgüter der Hochtemperaturzone zugeführt werden.

6. Verfahren nach einem der vorhergehenden Ansprüche,
**dadurch gekennzeichnet,**
**dass** eine Dispersion mit H₂O hergestellt wird.

7. Verfahren nach einem der Ansprüche 1 bis 6,
**dadurch gekennzeichnet,**
**dass** eine Dispersion mit viskositätsverändernden Stoffen hergestellt wird.

8. Verfahren nach vorhergehendem Anspruch,
**dadurch gekennzeichnet,**
**dass** der Stoff ein schwerölhaltiges Mittel ist.

9. Verfahren nach einem der vorhergehenden Ansprüche,
**dadurch gekennzeichnet ,**
**dass** der Dispersion weitere viskositätsverändernde Stoffe wie Raffinerieabfallprodukte und/oder Stärke zugesetzt werden.

10. Verfahren nach einem der vorhergehenden Ansprüche,
**dadurch gekennzeichnet,**
**dass** die Dispersion gegebenenfalls unter Zusatz eines Bindemittels brikettiert wird.

## Claims

1. Method for the disposal and utilisation of waste products of all types, in which unsorted industrial, domestic and/or special waste, containing noxious substances in solid and/or liquid form, as well as scrap industrial goods are subjected in a reactor to a gradual application of heat and to thermal separation or transformation of matter, and the solid residues occurring are converted into to a high-temperature melt, the goods to be disposed of, which are compressed in batches into compact packets in a compactor before being introduced into the reactor, passing through the thermal treatment stages in the direction of increasing temperature with at least one low-temperature stage in which, maintaining the applied pressure, contact with the walls of the reactor is ensured, and with at least one high-temperature zone under formation of a gas-permeable charge whilst synthesis gas is generated, the generated synthesis gas being led out of the high-temperature zone and being quenched by being sprayed with cooling water, **characterised in that**, in the case of residues in the form of dust and/or particles, as waste products, these are pre-formed by the formation of a dispersion and then fed to the process.

2. Method according to claim 1, **characterised in that** the residues are selected from the group consisting of filter dusts, dry sorbents, such as carbonates for example, and/or loaded active carbon.

3. Method according to the preceding claims, **characterised in that** the dispersion is a suspension.

4. Method according to any of the preceding claims, **characterised in that** the pre-formed waste products are fed to the compactor.

5. Method according to any of the preceding claims, **characterised in that** the pre-formed waste products are fed to the high-temperature zone.

6. Method according to any of the preceding claims, **characterised in that** a dispersion is produced with H₂O.

7. Method according to any of the preceding claims, **characterised in that** a dispersion is produced with viscosity-altering substances.

8. Method according to the preceding claim, **characterised in that** the substance is a medium containing heavy oil.

9. Method according to any of the preceding claims, **characterised in that** additional viscosity- altering substances, such as refinery waste products and/or starch, are added to the dispersion.

10. Method according to any of the preceding claims, **characterised in that** the dispersion is briquetted, possibly with the addition of a binding agent.

## Revendications

1. Procédé d'élimination et de valorisation de déchets de tous types, dans lequel des déchets industriels, ménagers et/ou spéciaux ainsi que des restes de produits industriels, non triés, contenant des substances polluantes sous forme solide et/ou liquide sont soumis à une sollicitation à la température graduelle et à une séparation ou une conversion thermique progressive dans un réacteur et les résidus solides formés sont transférés dans une masse fondue à haute température, dans lequel les produits à éliminer comprimés dans un compacteur de déchets sous forme de paquets compacts en discontinu avant d'être introduits dans le réacteur, traversent les étapes de traitement à température dans le sens d'une température croissante avec au moins une étape de basse température, dans laquelle, tout en maintenant une sollicitation à la pression, on assure un contact avec les parois du réacteur, et avec au moins une zone à haute température en formant un garnissage perméable aux gaz, de manière à produire du gaz de synthèse, dans lequel le gaz de synthèse produit est tiré de la zone à haute température et est refroidi brusquement par pulvérisation d'eau de refroidissement, **caractérisé en ce que**, dans le cas de déchets constitués de résidus sous forme de poussières et/ou de particules, ceux-ci sont pré-élaborés par formation d'une dispersion et acheminés ensuite au processus.

2. Procédé selon la revendication 1, **caractérisé en ce que** les résidus sont choisis dans le groupe constitué des poussières de filtres à air, des adsorbants de séchage, tels que les carbonates et/ou le charbon actif chargé.

3. Procédé selon l'une quelconque des revendications précédentes, **caractérisé en ce que** la dispersion est une suspension.

4. Procédé selon l'une quelconque des revendications précédentes, **caractérisé en ce que** les déchets pré-élaborés sont acheminés au compacteur de déchets.

5. Procédé selon l'une quelconque des revendications précédentes, **caractérisé en ce que** les déchets pré-élaborés sont acheminés à la zone à haute température.

6. Procédé selon l'une quelconque des revendications précédentes, **caractérisé en ce que** l'on produit une dispersion avec du H₂O.

7. Procédé selon l'une quelconque des revendications 1 à 6, **caractérisé en ce que** l'on produit une dispersion avec des substances à viscosité variable.

8. Procédé selon la revendication précédente, **caractérisé en ce que** la substance est un agent contenant de l'huile lourde

9. Procédé selon l'une quelconque des revendications précédentes, **caractérisé en ce que** l'on ajoute à la dispersion d'autres substances à viscosité variable, tels que des rebuts de raffinerie et/ou de l'amidon.

10. Procédé selon l'une quelconque des revendications précédentes, **caractérisé en ce que** la dispersion est éventuellement agglomérée par addition d'un liant.
